# EUROPÄISCHE PATENTSCHRIFT

(11) **EP 1 314 582 B1**
(45) Veröffentlichungstag und Bekanntmachung des Hinweises auf die Patenterteilung: **13.06.2007**
(21) Anmeldenummer: 02024851.4
(22) Anmeldetag: 08.11.2002
(51) Int. Cl.: B60C 23/00, G01D 7/00

(54) **Verfahren zur optischen Anzeige von Informationen auf einem Display in einem Nutzfahrzeug**
Method for the optical display of information on a display in an utility vehicle
Méthode pour l'affichage d'informations sur un écran d'affichage dans un véhicule utilitaire

(30) Priorität: 27.11.2001 DE 10158033
(43) Veröffentlichungstag der Anmeldung: 28.05.2003
(73) Patentinhaber: MAN Nutzfahrzeuge Aktiengesellschaft, 80976 München (DE)
(72) Erfinder: Spaderna, Josef, Dipl.-Ing., 85229 Markt Indersdorf (DE)

(56) Entgegenhaltungen:
- DE-A- 19 941 953

## Beschreibung

Die Erfindung betrifft ein Verfahren zur Anzeige von Informationen auf einem Display einer Anzeigevorrichtung in einem Nutzfahrzeug gemäß dem Oberbegriff des Anspruches 1.

Aus der DE 19 941 953 A1 ist ein Verfahren zur Anzeige von Informationen auf einem Bildschirm einer Anzeigevorrichtung in einem Kraftfahrzeug bekannt, wobei die anzuzeigenden Informationen von einer Bedienperson mittels Betätigung von Bedientasten aus einem auf dem Bildschirm dargestellten Angebot von Informationen und Darstellungsformen ausgewählt werden.

Es ist Aufgabe der Erfindung, ein Verfahren zur Anzeige von Reifenzuständen in einem Nutzfahrzeug hinsichtlich seiner Handhabung und Ablesbarkeit zu optimieren.

Diese Aufgabe wird erfindungsgemäß durch die Merkmale des Anspruches 1 gelöst.

Somit ist erfindungsgemäß ein Verfahren zur Anzeige von Informationen auf einem fahrerplatznahen Display einer Anzeigevorrichtung eines Nutzfahrzeuges gegeben, bei welchem die anzuzeigenden Informationen und deren Darstellungsformen von einem Fahrer mittels Betätigung eines Betätigungselementes aus einem auf dem Display darstellbaren Angebot von Informationen und Darstellungsformen auswählbar sind. Dabei sind mittels Betätigung eines Betätigungselementes auf dem Display als anzeigbare Informationen wenigstens Reifen-Informationen wie Reifen-Positionen (Reifenkennung), Reifen-Drücke, Reifen-Defektmarkierungen, Achs-Positionen (Achskennung) etc. bei Vorhandensein jeweils eines anzeigbaren äußeren Reifenpaares und/oder eines anzeigbaren inneren Reifenpaares einer Achse des gesamten Nutzfahrzeuges in Form von selbsterklärenden Symbolen und/oder eines Datentextes und/oder von Daten sukzessiv und als achsweise abrufbare Einzeldarstellung eines Reifen-Achsen-Schemas aktuell zur Anzeige bringbar.

Der Anzeigevorrichtung ist neben einem Rechner/Bordrechner, dem Display und dem Betätigungselement ein mit den Reifen des Nutzfahrzeuges in Verbindung stehendes Reifen-Kontrollgerät zugehörig. Dieses sendet aktuelle Reifenzustände in Form von Daten an den Rechner/Bordrechner, welche von diesem memoriert werden und bedarfsweise nach Betätigung des Betätigungselementes auf dem Display zur Anzeige bringbar sind.

Gemäß einer weiteren Ausgestaltung der Erfindung können mittels der Einzeldarstellung des Reifen-Achsen-Schemas eines aktuell dargestellten Reifenpaares einer doppelbereiften Achse zunächst die verfügbaren Reifen-Informationen von äußeren Reifen angezeigt und letztere zunächst als Reifenkennung in Vollmarkierung dargestellt sein. Anschließend können nach erneuter Betätigung des Betätigungselementes die verfügbaren Reifen-Informationen von inneren Reifen angezeigt und letztere als Reifenkennung beispielsweise in Vollmarkierung oder einer sonstigen auffälligen Darstellungsform auf dem Display dargestellt sein. Des weiteren kann gegebenenfalls die Reihenfolge der im Reifen-Achsen-Schema des Displays anzeigbaren Achse sowie ihres äußeren Reifenpaares und ihres inneren Reifenpaares umkehrbar sein. Auf diese Weise kann mittels des Bedienelementes jedes Reifenpaar des Nutzfahrzeuges problemlos und schnell auf dem Display aufgerufen werden.

Gemäß einer weiteren Ausgestaltung der Erfindung können die jeweils deaktualisiert im Display angezeigt bleibenden Reifen einer Achse als Reifenkennung in einer optisch unauffälligeren Darstellungsform angezeigt sein. Diese unauffälligere Darstellungsform kann durch eine Liniendarstellung oder durch eine strichlierte Darstellung oder durch eine optische Verkleinerung oder durch eine positionsmäßig versetzte Darstellung der deaktualisiert im Display angezeigt bleibenden Reifen gegeben sein.

Des weiteren kann bei einer Einzelbereifung des Nutzfahrzeuges die optische Anzeige entweder des äußeren Reifenpaares oder des inneren Reifenpaares des auf dem Display angezeigten Reifen-Achsen-Schemas vollständig unterdrückt sein.

Gemäß einer weiteren Ausgestaltung der Erfindung kann mittels einer im Betätigungselement vorgesehenen Auftastfunktion eine bevorzugte und gegebenenfalls bedarfsweise umkehrbare Anzeigenreihenfolge im Display anzeigbarer/aufrufbarer Reifen-Informationen vorgesehen sein, mittels dieser nach jeder erneuten Betätigung des Betätigungselementes zunächst die äußeren und anschließend die inneren Reifen derselben Achse und danach die äußeren und anschließend die inneren Reifen der jeweils nächstfolgenden Achse bzw. vorhergehenden Achse (Umkehrfunktion) mit aktueller Vollmarkierung, Daten, Datentext und gegebenenfalls Reifen-Defektmarkierung versehen aktuell angezeigt werden können.

Gemäß einer weiteren Ausgestaltung der Erfindung kann mittels einer im Betätigungselement zusätzlich vorgesehenen Umkehrfunktion bedarfsweise die Anzeigereihenfolge und gegebenenfalls die Richtung der Anzeigereihenfolge der im Display aufrufbaren/anzeigbaren Reifen-Informationen umkehrbar sein. Somit kann mittels des Bedienelementes zwischen den verschiedenen, am Display aufrufbaren Reifen-Achsen-Schemata problemlos navigiert werden.

Gemäß einer weiteren Ausgestaltung der Erfindung können als Daten die die aktuell angezeigten äußeren oder inneren Reifen betreffenden Reifen-Drücke beispielsweise in "bar" und zusätzlich oder stattdessen gegebenenfalls die betreffenden Reifen-Temperaturen beispielsweise in "°C" auf dem Display im Umfeld der betreffenden Reifen des Reifen-Achsen-Schemas anzeigbar sein. Anstelle von "bar" für Reifen-Drücke und "°C" für Reifen-Temperaturen können gegebenenfalls andere gebräuchliche Einheiten verwendet sein.

Des weiteren können gegebenenfalls als einem ersten Datentext beispielsweise die Worte "Reifendruck", "Reifentemperatur" und gegebenenfalls als einem zweiten Datentext beispielsweise die Worte "Zugwagen", "Anhänger 1" oder "Anhänger 2" in deutscher oder wahlweise sonstiger Sprache auf dem Display im Umfeld der Anzeige der betreffenden Reifen des Reifen-Achsen-Schemas anzeigbar sein. Dabei kann mittels der Worte "Zugwagen", "Anhänger 1" oder "Anhänger 2" des zweiten Datentextes und/oder mittels gegebener selbsterklärender Symbolzeichen der die jeweilig angezeigte Achse aufnehmende Wagentyp kennzeichenbar sein. Dabei kann gegebenenfalls bei Angabe des jeweiligen Wagentyps mittels Symbolzeichen und/oder Datentext die Nummerierung der Achsen bei jedem Wagentyp erneut beginnen.

Des weiteren kann mittels einer zwischen den Reifen des Reifen-Achsen-Schemas angebbaren Ziffer (Achskennung) die aktuell auf dem Display angezeigte Achse des jeweiligen Wagentyps oder des Gesamtfahrzeuges kennzeichenbar sein.

Gemäß einer weiteren Ausgestaltung der Erfindung kann bei Auftreten einer Funktionsstörung eines Reifens dessen aktuell als Reifenkennung angezeigte Vollmarkierung oder dergleichen auf dem Display mit einer Reifen-Defektmarkierung markiert sein. Diese Reifen-Defektmarkierung kann durch ein auf der Vollmarkierung platziertes, gegenüber dieser kontrastmäßig oder farblich abgehobenes Ausrufezeichen oder beispielsweise durch ein Normsymbol für Reifenstörung oder durch eine periodisch wechselnde Groß/Klein-, Farb-, invertierter Darstellung oder dergleichen gegeben sein. Das Ausrufezeichen kann eine zur Vollmarkierung komplementäre Farbgebung oder Schattierung aufweisen.

Gemäß einer weiteren Ausgestaltung der Erfindung kann bei Auftreten einer Funktionsstörung eines Reifens zusätzlich zur aktuell am Display anzeigbaren Reifen-Defektmarkierung eine invertierte oder periodisch hervorgehobene Darstellung der diesen Reifen betreffenden Daten und gegebenenfalls der betreffenden Datentexte gegeben sein. Zusätzlich hierzu kann gegebenenfalls ein Signalton über einen mit der Anzeigenvorrichtung in Verbindung stehenden Lautsprecher ausgebbar sein.

Gemäß einer weiteren Ausgestaltung der Erfindung können von den auf dem Display anzeigbaren Reifen-Informationen verschiedene zusätzliche Informationen optional oder prioritätsbedingt zusätzlich oder anstelle der Reifen-Informationen auf dem Display anzeigbar sein.

Gemäß einer weiteren Ausgestaltung der Erfindung können bei gleichzeitiger Darstellung von zusätzlichen Informationen und Reifen-Informationen die zusätzlichen Informationen in einem hierfür reservierten Darstellungsfeld des Displays anzeigbar sein. Dieses Feld kann beispielsweise oberhalb oder unterhalb des Reifen-Achsen-Schemas angeordnet sein.

Gemäß einer weiteren Ausgestaltung der Erfindung kann die Nummerierung der auf dem Display sukzessiv anzeigbaren Achsen mit der ersten vorderen Achse des gesamten Nutzfahrzeuges beginnen.

Gemäß einer weiteren Ausgestaltung der Erfindung kann eine Anzeige von Reifen-Informationen einer aktuell abgerufenen Achse - Achskennung/Achsposition- auf dem Display unterbleiben, wenn das Reifenkontrollsystem für diese Achse an das Display keine Daten zur Verfügung stellt.

Gemäß einer weiteren Ausgestaltung der Erfindung kann bei unvollständigem oder fehlerhaften Zurverfügungstellen von Reifen-Informationen eines Reifens für die Anzeige auf dem Display eine zusätzliche Reifen-Information dieses Reifens gegebenenfalls durch einen dritten Datentext, beispielsweise mit den Worten/Angaben "nicht verfügbar" oder "-,-" oder dergleichen zur Anzeige bringbar sein. Dabei können alle übrigen verfügbaren Reifen-Informationen der Reifen der aktuell aufgerufenen Achse im Display anzeigbar sein.

Nachfolgend ist die erfindungsgemäße Lösung anhand eines Ausführungsbeispieles näher erläutert.

In der Zeichnung zeigen:
- Fig. 1: ein Darstellungsfeld eines Displays eines Nutzfahrzeuges mit einem hierauf dargestellten Reifen-Achsen-Schema mit einer Reifen-Defektmarkierung (Symbol) sowie mit zusätzlichen Informationen,
- Fig. 2: ein Display gemäß Fig. 1 mit einem Reifen-Achsen-Schema und einer Vollmarkierung eines inneren Reifenpaares eines doppelt bereiften Nutzfahrzeuges,
- Fig. 3: ein Display gemäß Fig. 1 mit einem Reifen-Achsen-Schema mit einem unmarkierten Reifenpaar und einem optischen Anzeigen nicht verfügbarer Reifendaten,
- Fig. 4: ein Display gemäß Fig. 1 mit einem hierauf dargestellten Reifen-Achsen-Schema, dessen aktuell angezeigtes äußeres Reifenpaar mit einem markierten und einem unmarkierten äußeren Reifen dargestellt ist,
- Fig. 5: ein auf einem Display gemäß Fig. 1 dargestelltes Reifen-Achsen-Schema mit einem mit einer Defektmarkierung versehenen äußeren Reifenpaar und einer Angabe invertiert dargestellter Reifendefekt-Daten,
- Fig. 6: gemäß Fig. 5 eine Defektmarkierung eines einzelnen Reifens eines in einem Reifen-Achsen-Schema dargestellten äußeren Reifenpaares und
- Fig. 7: in schematischer Darstellung ein Blockschaltbild einer Anzeigevorrichtung mit im wesentlichen einem Display und einem hiermit verbundenen Bedienelement.

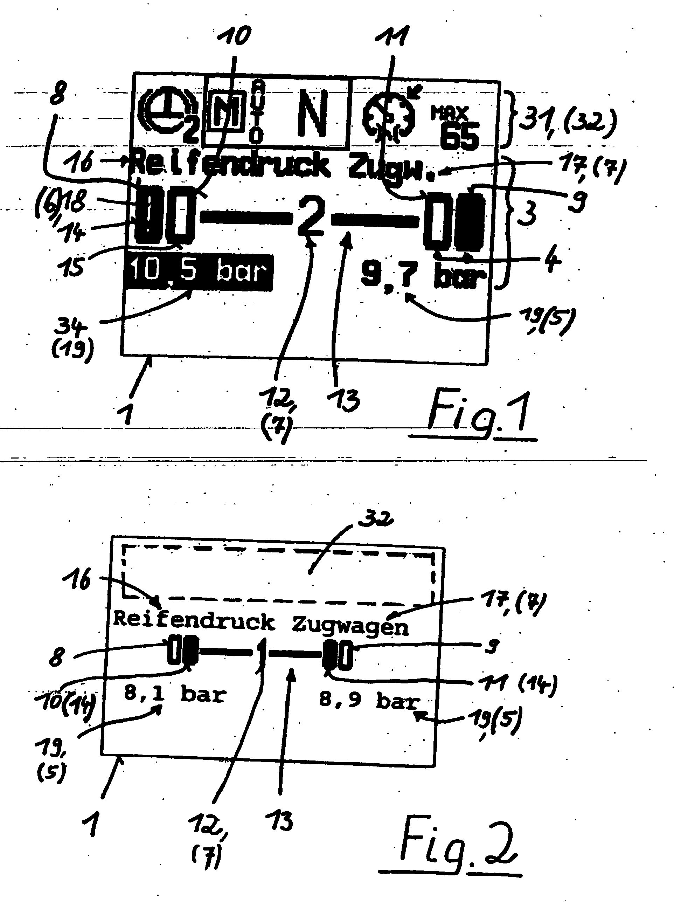

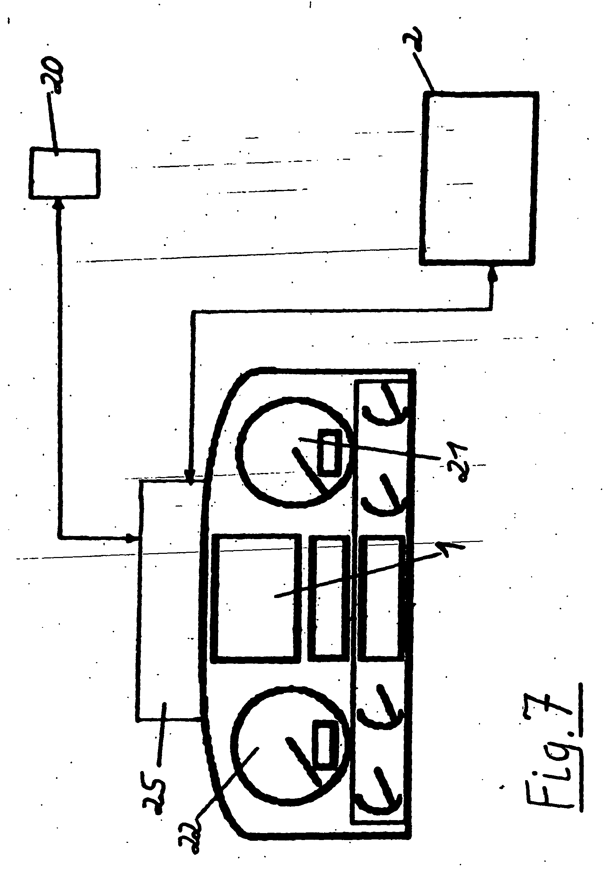

In Fig. 1 ist ein Darstellungsfeld eines Displays 1 einer Anzeigevorrichtung in einem Nutzfahrzeug gezeigt. Auf dem Darstellungsfeld des Displays 1 sind anzeigbare Informationen und deren Darstellungsformen von einem Fahrer beispielsweise mittels Betätigung eines in Fig. 6 dargestellten Betätigungselementes 2 aufrufbar. Das der Anzeigevorrichtung zugehörige Display 1 ist bevorzugterweise fahrerptatznah angeordnet und steht zusammen mit dem Betätigungselement 2 über einem Display-Rechner 25 oder einem vergleichbaren Rechner mit einem die Reifenzustände des Nutzfahrzeuges als fahrzeugrelevante Informationsinhalte (20) (Fig. 7) erfassenden Reifenkontrollsystem in Verbindung. Mittels Betätigung des Betätigungselementes 2 können als anzeigbare Informationen wenigstens Reifen-Informationen 3 wie beispielsweise Reifen-Positionen (Reifenkennung) 4, Reifen-Drücke 5, Reifen-Defektmarkierungen 6, Achs-Positionen (Achskennung) 7 und Reifen-Temperaturen 35 (Fig. 6) jeweils zunächst eines anzeigbaren äußeren Reifenpaares 8, 9 und nach erneuter Betätigung des Betätigungselementes 2 eines anzeigbaren inneren Reifenpaares 10, 11 einer aktuell am Display 1 angezeigten Achse 12 des gesamten Nutzfahrzeuges dargestellt werden. Die vorgenannten Reifen-Informationen 3 sind auf dem Display 1 in Form von selbsterklärenden Symbolen sukzessiv und in achsweise abrufbarer Einzeldarstellung in einem Reifen-Achsen-Schema 13 zusammen mit Datentexten 16, 17 und Daten 19 zur Anzeige bringbar.

Des weiteren können gegebenenfalls zusätzlich zu den anzeigbaren Reifen-Informationen 3 verschiedene zusätzliche Informationen 31 optional oder prioritätsbedingt zusätzlich zu den Reifen-Informationen 3 oder anstelle der Reifen-Informationen 3 auf dem Display 1 anzeigbar sein. In Fig. 1 ist eine gleichzeitige Darstellung von zusätzlichen Informationen 31 und Reifen-Informationen 3 gegeben. Die zusätzlichen Informationen 31 sind in einem hierfür reservierten Darstellungsfeld 32 des Displays 1 anzeigbar. Dieses Darstellungsfeld 32 ist in dem hier gezeigten Ausführungsbeispiel beispielsweise oberhalb des Reifen-Achsen-Schemas 13 des Displays 1 angeordnet. Als zusätzliche Informationen 31, welche hier in einem oberen Darstellungsfeld 32 des Displays 1 angeordnet sind, können beispielsweise Informationen über maximale Betriebsdrehzahl, Retarderbetrieb, zugeschaltete Achsen usw. auf dem Display 1 anzeigbar sein. Das hier beispielsweise im oberen Bereich des Displays 1 angeordnete Darstellungsfeld 32 ist somit vorzugsweise für das optimale oder kontinuierliche Aufzeigen autonom anzeigbarer und vom Fahrer mittels der Bedienvorrichtung 2 unbeeinflussbarer Informationen (Informationsinhalte) 31 reserviert.

In Fig. 1 wird in Einzeldarstellung das Reifen-Achsen-Schema 13 eines Reifenpaares 8, 9; 10, 11 einer aktuell dargestellten Achse 12 mit Doppelbereifung gezeigt. Dabei können mittels eines in Fig. 6 beispielsweise gezeigten Betätigungselementes 2 zunächst die verfügbaren Reifen-Informationen 3 des äußeren Reifenpaares 8, 9 auf dem Display 1 aufgerufen werden. Das symbolhaft und datenmäßig aktuell angezeigte äußere Reifenpaar 8, 9 ist dabei in einer Vollmarkierung 14 dargestellt. Die zunächst deaktualisiert im Display 1 angezeigt bleibenden inneren Reifen 10, 11 der Achse 12 - hier die zweite Achse eines Zugwagens - sind hierbei in einer optisch unauffälligeren Darstellungsform dargestellt. Diese ist in dem hier angezeigten Ausführungsbeispiel durch eine Liniendarstellung 15 gegeben und kann alternativ beispielsweise durch eine optische Verkleinerung oder durch eine positionsmäßig versetzte Darstellung im Display 1 gegeben sein. Die optische Verkleinerung deaktualisiert im Display 1 angezeigt bleibender äußerer oder innerer Reifen 8, 9; 10, 11 einer Achse 12 und kann alternativ durch andere unauffällige Darstellungsformen gegeben sein.

Mittels einer im Betätigungselement 2 vorgesehenen Auftastfunktion ist eine kontinuierlich vor- oder rückschreitende Anzeigenreihenfolge im Display 1 anzeigbarerlaufrufbarer Reifen-Informationen 3 gegeben. Mittels dieser Auftastfunktion sind nach jeder erneuten Betätigung des Betätigungselementes 2 zunächst die äußeren Reifen 8, 9 und anschließend die inneren Reifen 10, 11 derselben aktuell aufgerufenen Achse 12 anzeigbar. Anschließend können optional nach erneuter Betätigung des Betätigungselementes 2 zunächst die äußeren Reifen 8, 9 und anschließend die inneren Reifen 10, 11 - in Alternative bedarfsweise in umgekehrter Reihenfolge - der jeweils nächstfolgenden bzw. nächstzurückliegenden Achse des gesamten Nutzfahrzeuges gegebenenfalls einschließlich dessen Anhänger mit aktueller Vollmarkierung 14, Datentext 16, 17, Daten 19 - gegebenenfalls mit der Reifen-Defektmarkierung 6 versehen - aufrufbar sein. Als Daten 19 sind die die aktuell angezeigten äußeren oder inneren Reifen 8, 9; 10, 11 betreffenden Reifen-Drücke 5 in "bar" anzeigbar. Gegebenenfalls können bei weiterer Betätigung des Betätigungselementes 2 optional anstelle der Reifen-Drücke 5 die Reifen-Temperaturen der betreffenden Reifen 8, 9; 10, 11 in "°C" auf dem Display 1 unterhalb des Reifen-Achsen-Schemas 13 anzeigbar sein.

Des weiteren sind als einem ersten Datentext 16 beispielsweise die Worte "Reifendruck" oder "Reifentemperatur" und als einem zweiten Datentext 17 die Worte "Zugwagen", "Anhänger 1" oder "Anhänger 2" in deutscher oder sonstiger Sprache auf dem Display 1 oberhalb des Reifen-Achsen-Schemas 13 anzeigbar. Gegebenenfalls kann die Sprache mittels des Betätigungselementes 2 auswählbar sein. Mittels der Worte des zweiten Datentextes 17 wie beispielsweise "Zugwagen", "Anhänger 1" oder "Anhänger 2" und/oder mittels selbsterklärender, in Fig. 6 gezeigter Symbolzeichen 41 ist gegebenenfalls der die jeweilig angezeigte Achse 12 aufnehmende Wagentyp Kennzeichenbar. Der hier mittels Symbolzeichen 41 angezeigte Wagentyp stellt einen "Zugwagen" dar

Des weiteren ist mittels einer zwischen den äußeren Reifen 8, 9 und den inneren Reifen 10, 11 des Reifen-Achsen-Schemas 13 angeordneten und je nach Achse variierenden Ziffer die aktuell auf dem Display 1 angezeigte Achse 12 kennzeichenbar. In dem hier gezeigten Ausführungsbeispiel ist als Ziffer die Zahl "2" für die zweite Achse im "Zugwagen" (Datentext 17) angegeben. Durch die angebbare Ziffer im Reifen-Achsen-Schema 13 und der Angabe des zweiten Datentextes 17 ist somit eine exakte Achs-Position 7 auf dem Display 1 definiert angebbar und darstellbar.

Bei Auftreten einer Funktionsstörung an einem oder mehreren der Reifen 8, 9; 10, 11 kann deren aktualisiert angezeigte Vollmarkierung 14 auf dem Display 1 mit einer Reifen-Defektmarkierung 6 versehen werden. Diese Reifen-Defektmarkierung 6 kann durch ein auf der Vollmarkierung 14 platziertes Ausrufezeichen 18 oder durch eine sonstige Markierung gegeben sein. Das Ausrufezeichen 18 oder die Markierung kann eine zur Vollmarkierung 14 komplementäre Farbgebung aufweisen.

Bei Erkennen der jeweiligen Zustände der Reifen des Nutzfahrzeuges durch das Reifen-Kontrollgerät können diese Zustände den jeweils auf dem Display 1 dargestellten Reifen 8, 9; 10, 11 einander entsprechend zugeordnet und bei gegebenenfalls auftretenden Funktionsstörungen an diesen Reifen stellvertretend für diese mittels der symbolhaft dargestellten Reifen 8, 9; 10, 11 auf dem Display 1 als Reifen-Defektmarkierung 6 angezeigt werden. Zusätzlich zu dieser Darstellung der Reifenzustände können die vom Reifen-Kontrollgerät erkannten und im Display 1 angezeigten, gegebenenfalls auftretenden Funktionsstörungen der Reifen mittels der symbolhaft dargestellten Reifen 8, 9; 10, 11 in einer von der übrigen Darstellung optisch abgehobenen Darstellung, beispielsweise einer invertierten Darstellung 14 der betreffenden Daten 19 und gegebenenfalls mittels zusätzlicher Datentexte 16, 17 angezeigt sein. Dadurch ist eine optisch auffällige Darstellung im Display 1 aktuell aufgerufener, gegebenenfalls als defekt markierten Reifen 8, 9; 10, 11 gegeben.

Die Nummerierung der auf dem Display 1 aktuell anzeigbaren Achsen 12 ist solcherart festgelegt, dass sie mit der von Frontseite des gesamten Nutzfahrzeuges beginnenden Zählung der Achsen korreliert

In Fig. 2 befindet sich das Reifen-Achsen-Schema 13 gemäß Fig. 1 zentral auf dem Darstellungsfeld des Displays 1. Die in einem oberen, hier gestrichelt angedeuteten Darstellungsfeld 32 oberhalb des Reifen-Achsen-Schemas 13 anzeigbaren zusätzlichen, fahrzeugspezifischen Informationen 31 sind in diesem Ausführungsbeispiel aus Übersichtlichkeitsgründen nicht dargestellt worden.

In der hier gezeigten Ausführung ist das innere Reifenpaar 10, 11 einer ersten Achse (Achsangabe 12, Achs-Position 7) durch Vollmarkierung 14 gekennzeichnet. Zusätzlich zur Achsangabe 12 (erste Achse "1") ist durch den zweiten Datentext 17 - hier beispielsweise "Zugwagen" - die Achs-Position 7 definiert. Die auf dem Display 1 im Reifen-Achsen-Schema 13 dargestellte erste Achse des "Zugwagens" zeigt durch Vollmarkierung 14 das innere Reifenpaar 10, 11 mit den dazugehörigen, unterhalb des Reifen-Achsen-Schemas 13 angeordneten Daten 19, deren Reifen-Drücke 5 beispielsweise mit "8,1 bar" bzw. "8,9 bar" an. Dass es sich bei den angezeigten Daten 19 um Reifen-Drücke 5 handelt wird zusätzlich zu den angegebenen Einheiten - hier beispielsweise in "bar" - mittels eines in einem linken oberen Feld oberhalb des Reifen-Achsen-Schemas 13 anzeigbaren ersten Datentextes 16 beispielsweise mit dem Wort "Reifendruck" angezeigt. Anstelle der Angabe der Reifen-Drücke 5 in der Einheit "bar" sind auch andere, hierfür geeignete Einheiten denkbar.

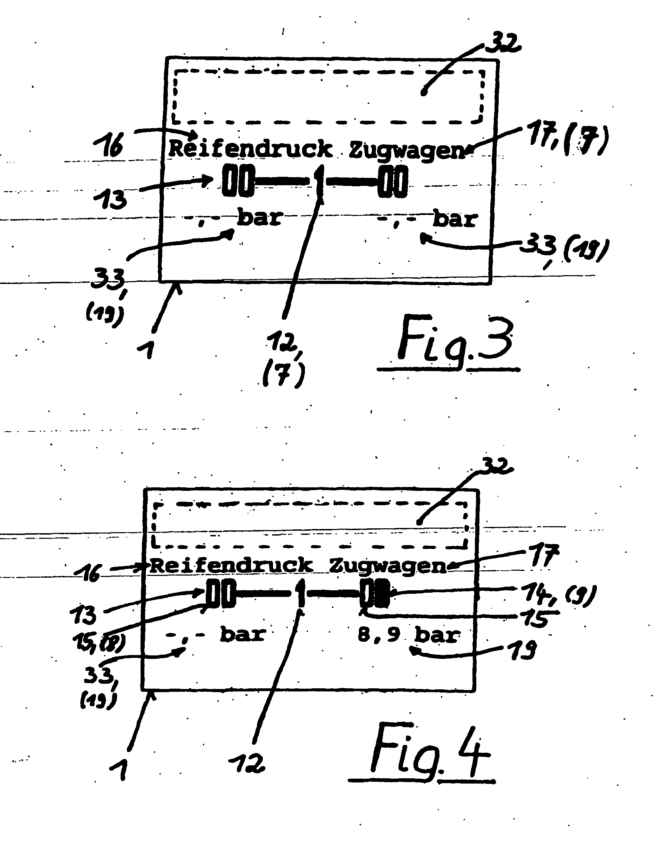

In Fig. 3 ist gemäß Fig. 1 auf dem Display 1 das obere Darstellungsfeld 32 für zusätzliche Informationen 31 reserviert. Unterhalb dieses oberen Darstellungsfeldes 32 befindet sich in einem linken oberen Darstellungsfeld die Angabe des ersten Datentextes 16- hier beispielsweise "Reifendruck" - und daneben in einem zweiten Darstellungsfeld der zweite Datentext 17, hier beispielsweise mit dem Wort "Zugwagen". In diesem Ausführungsbeispiel ist die Achs-Position 7 einer ersten Achse durch den zweiten Datentext 17 "Zugwagen" und die Ziffer "1" für die Achsangabe 12 definiert. Zusätzlich oder anstelle der Angabe der Reifen-Drücke 5 sind beispielsweise Reifen-Temperaturen 35 (Fig. 6) auf dem Display 1 anzeigbar.

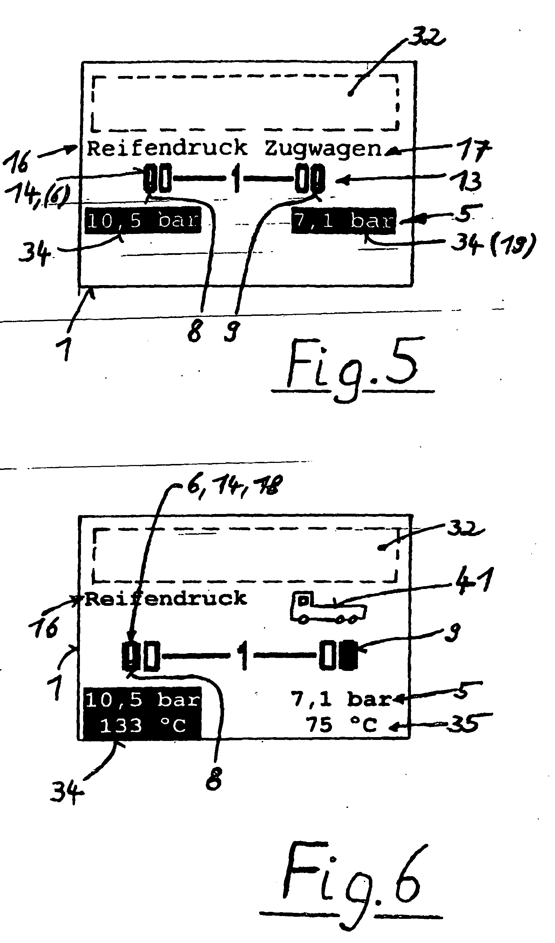

Wie in Fig. 3 und 4 gezeigt unterbleibt eine Anzeige von Reifen-Informationen 3 einer aktuell abgerufenen Achse 12 auf dem Display 1, sobald als fahrzeugrelevante Informationsinhalte 20 (Fig. 7) das Reifenkontrollsystems für diese Achse 12 keine Daten 19 am Display 1 zur Verfügung stellt. Bei unvollständigem oder fehlerhaftem Zurverfügungstellen von Reifen-Informationen 3 wenigstens eines der anzeigbaren Reifen 8, 9; 10, 11 auf dem Display 1 durch das Reifenkontrollsystem ist eine Störungsmeldung als Reifen-Information 3 dieses Reifens 8,-9; 10, 11 durch einen dritten möglichen Datentext 33 zur Anzeige bringbar. Dieser kann durch die Worte wie beispielsweise "nicht verfügbar" oder "-,-" oder dergleichen gegeben sein. Alle übrigen verfügbaren Reifen-Informationen 3 der Reifen 8, 9; 10, 11 der aktuell aufgerufenen Achse 12 sind jedoch im Display 1 anzeigbar.

In Fig. 4 ist der linke äußere Reifen 8 in einer Liniendarstellung 15 gezeigt. Mittels dem unter dem Reifen 8 befindlichen dritten Datentext 33 - beispielsweise in seiner Darstellungsform "-,-bar" - ist der Hinweis gegeben, dass für diesen Reifen 8 keine Daten zur Verfügung stehen. Hingegen ist der rechte äußere Reifen 9 in einer Vollmarkierung 14 dargestellt. Für diesen äußeren Reifen 9 sind als Daten 19 ein Reifen-Druck 5 - hier beispielsweise "8, 9 bar" - anzeigbar.

In Fig. 5 sind gemäß Displays 1 gemäß Fig. 1 unterhalb des oberen Darstellungsfeldes 32 als einem ersten Datentext 16 beispielsweise das Wort "Reifendruck" und als einem zweitem Datentext 17 beispielsweise das Wort "Zugwagen" sowie das Reifen-Achsen-Schema 13 mit Angaben der Reifen-Drücke 5 dargestellt.

In diesem Ausführungsbeispiel ist das äußere Reifenpaar 8, 9 sowohl mit einer Vollmarkierung 14 als auch mit einer Reifen-Defektmarkierung 6 versehen. Des weiteren ist zusätzlich zur Reifen-Defektmarkierung 6, welche hier durch ein auf der Vollmarkierung 14 platziertes Ausrufezeichen 18 gegeben ist, eine invertierte Darstellung 34 der jeweiligen Daten 19 gegeben, welche das dem Display 1 als defekt gemeldete äußere Reifenpaar 8, 9 betreffen. In einem hier nicht gezeigten Ausführungsbeispiel können gegebenenfalls auch die ersten und zweiten Datentexte 16, 17 der als defekt gemeldeten Reifen in einer invertierten Darstellung 34 am Display 1 anzeigbar sein.

In Fig. 6 ist gemäß Fig. 5 eine Defektmarkierung 6 des linken äußeren Reifens 8 sowie zusätzlich zur Angabe der Reifen-Drücke 5 der betreffenden Reifen 8, 9; 10, 11 eine Angabe der Reifen-Temperaturen 35 angezeigt. Letztere sind hier unterhalb der angezeigten Reifen-Drücke 5 platziert und können alternativ hierzu anstelle der Reifen-Drücke 5 oder oberhalb dieser zur Angabe auf dem Display 1 gebracht sein. Zusätzlich zur Defektmarkierung 6 des linken, äußeren Reifens 8 mittels eines auf der Vollmarkierung 14 platzierten Ausrufezeichens 18 sind die zum Reifen 8 gehörenden Angaben von Reifen-Druck 5 und Reifen-Temperatur 35 in invertierter Darstellung 34 auf dem Display 1 angezeigt. Anstelle des in Fig. 5 gezeigten Datentextes 17 (beispielsweise "Zugwagen") ist in Fig. 6 alternativ ein Symbolzeichen 41 für das Anzeigen des Wagentyps - hier beispielsweise "Zugwagen" - gewählt.

In Fig. 7 ist als Blockschaltbild eine Anzeigevorrichtung gezeigt, die zur bedarfsweise manuell durch den Fahrer auslösbaren, optischen Anzeige, Auswahl bzw. Beeinflussung fahrzeugrelevanter und/oder komfortbezogener wie Signale, Hinweise, Warnungen, Handlungsempfehlungen, Geräteeinstellungen etc. bzw. Gerätefunktionen vorgesehen ist. Die Anzeigevorrichtung besitzt für eine zentrale Anzeige dieser fahrzeugbezogener Informationsinhalte 3, 31 und/oder komfortbezogenen Informationsinhalte im wesentlichen ein zentrales Display 1, welches im Fahrersichtfeld angeordnet ist. Dieses befindet sich bei dem dargestellten Ausführungsbeispiel zwischen einer Drehzahlanzeigeeinrichtung 22 und einer Anzeigeeinrichtung 21 für die Fahrzeuggeschwindigkeit in einer Armaturentafel vor einem Lenkrad des Nutzfahrzeuges. Zusätzlich zum zentralen Display 1 weist die Anzeigevorrichtung einen für die Anzeigesteuerung vornehmlich des Displays 1 vorgesehenen Display-Rechner 5 oder einen gleichwertigen Rechner sowie eine mit dem zentralen Display 1 und dem Display-Rechner 5 korrespondierendes Betätigungselement 2 auf.

Das zentrale Display 1 ist gegebenenfalls zwecks Aufzeigen von einander verschiedener Informationsinhalte in voneinander separierbare Darstellungsbereiche unterteilbar. Bei einem Normalbetrieb des zentralen Displays 1 kann dessen gesamter Darstellungsraum zumindest teilweise für das Aufzeigen autonomer, vom Fahrer mittels des Betätigungselementes 2 unbeeinflussbarer, gegebenenfalls unterschiedlicher Informationsinhalte 20 reserviert sein. Diese bestehen im wesentlichen aus fahrzeugrelevanten Informationsinhalten wie Daten von Fahrzeugfunktionen, beispielsweise Reifen-Informationen (Reifenwarn-Information) und dergleichen. Die mittels des Betätigungselementes 2 weitestgehend unbeeinflussbaren und vom Rechner/Bordrechner 25 abrufbaren Informationsinhalte 20 sind Fahrzeugdaten und/oder fahrzeugrelevante Fahrzeugbetriebsdaten, wie beispielsweise Reifen-Informationen 3. Die Informationsinhalte 20 können beispielsweise über ein Reifenkontrollsystem gegebenenfalls periodisch ermittelt und in ihrem Ergebnis als Reifen-Informationen 3 auf dem Display 1 angezeigt werden. Die Informationsinhalte 20 sind für die Zustandserkennung des Nutzfahrzeuges erforderlich und können gegebenenfalls über einen weiteren Kommunikations-DatenBus an dem Display-Rechner 5 (oder einem vergleichbaren Rechner) angebunden sein.

Das der Anzeigevorrichtung zugehörige Bedienelement 2 ist in einem behinderungsfreien, primären Bedienfeld des Fahrers angeordnet und ohne dessen Positionsveränderung mit einer Hand funktionssicher bedienbar

Nach einer anderen, hier nicht gezeigten Ausführungsart kann die Anzeigevorrichtung nur ein einfach ausgeführtes, mit einem Reifenkontrollsystem in Verbindung stehendes Betätigungselement aufweisen, mittels diesem die erwünschten Reifeninformationen 3 des Nutzfahrzeuges auf dem Display 1 aufrufbar sind.

## Patentansprüche

1. Verfahren zur Anzeige von Informationen auf einem Display (1) einer Anzeigenvorrichtung in einem Nutzfahrzeug, wobei die anzuzeigenden Informationen und deren Darstellungsformen von einem Fahrer mittels Betätigung eines Betätigungselementes (2) aus einem auf dem Display (1) dargestellten Angebot von Informationen und Darstellungsformen auswählbar ist, **dadurch gekennzeichnet, dass** mittels Betätigung eines Betätigungselementes (2) auf einem fahrerplatznahen Display (1) als anzeigebare Informationen wenigstens Reifen-Informationen (3) wie Reifen-Positionen (Reifenkennung) (4), Reifen-Drücke (5), Reifen-Defektmarkierungen (6), Achs-Positionen (Achskennung) (7) bei Vorhandensein jeweils eines anzeigbaren äußeren Reifenpaares (8, 9) und/oder eines anzeigbaren inneren Reifenpaares (10, 11) einer Achse (12) des gesamten Nutzfahrzeuges in Form von selbsterklärenden Symbolen und/oder eines Datentextes (16, 17) und/oder von Daten (19) sukzessiv und als achsweise abgerufene Einzeldarstellungs eines Reifen-Achsen-Schemas (13) akutell zur Anzeige gebracht werden.

2. Verfahren nach Anspruch 1, **dadurch gekennzeichnet, dass** mittels der Einzeldarstellung des Reifen-Achsen-Schemas (13) eines aktuell dargestellten Reifenpaares (8, 9; 10, 11) einer Achse (12) bei einer Doppelbereifung
a) zunächst die verfügbaren Reifen-Informationen (3) des äußeren Reifenpaares (8, 9) angezeigt und letztere zunächst als Reifenkennung (Reifen-Positionen) (4) in einer Vollmarkierung (14) dargestellt sind, und dass
b) anschließend - nach erneuter Betätigung des Betätigungselementes (2) - die verfügbaren Reifen-Informationen (3) des inneren Reifenpaares (10, 11) angezeigt und letztere als Reifenkennung (4) in einer Vollmarkierung (14) dargestellt sind, und dass
c) gegebenenfalls die Reifenfolge der im Reifen-Achsen-Schema (13) des Displays (1) aktuell anzeigbare Achsen (12) sowie ihres äußeren Reifenpaares (8, 9) und ihres inneren Reifenpaares (10, 11) umkehrbar ist.

3. Verfahren nach Anspruch 2, **dadurch gekennzeichnet, dass** die jeweils deaktualisiert im Display (1) angezeigt bleibenden äußeren oder inneren Reifen (8, 9; 10, 11) einer Achse (12) als Reifenkennung (4) in einer optisch unauffälligeren Darstellungsform angezeigt werden und dass diese Darstellungsform durch eine Liniendarstellung (15) oder durch eine strichlierte Darstellung oder durch eine optische Verkleinerung der angezeigt bleibenden äußeren oder inneren Reifen (8, 9; 10, 11) gegeben ist, und dass bei einer Einzelbereifung des Nutzfahrzeuges die optische Anzeige entweder des äu-ßeren Reifenpaares (8, 9) oder des inneren Reifenpaares (10, 11) des Reifen-Achsen-Schemas (13) auf dem Display (1) vollständig unterdrückt ist.

4. Verfahren nach einem der Ansprüche 1 bis 3, **dadurch gekennzeichnet, dass** mittels einer im Betätigungselement (2) vorgesehenen Auftastfunktion eine bevorzugte und gegebenenfalls umkehrbare Anzeigenreihenfolge im Display (1) anzeigbarer/aufrufbarer Reifen-Informationen (3) vorgesehen ist, mittels dieser nach jeder erneuten Betätigung des Betätigungselementes (2) zunächst die äußeren Reifen (8, 9) und anschließend die inneren Reifen (10, 11) derselben Achse (12) und danach die äußeren Reifen (8, 9) - und anschließend die inneren Reifen (10, 11) der jeweils nächstfolgenden bzw. vorhergehenden Achse (12) mit aktueller Vollmarkierung (14), Datentext (16, 17), Daten (19) und gegebenenfalls Reifen-Defektmarkierung (6) versehen - aktuell angezeigt werden.

5. Verfahren nach einem der Ansprüche 1 bis 4, **dadurch gekennzeichnet, dass** mittels einer im Betätigungselement (2) zusätzlich vorgesehenen Umkehrfunktion bedarfsweise die Anzeigereihenfolge und gegebenenfalls die Richtung der Anzeigereihenfolge der im Display (1) aufrufbaren/anzeigbaren Reifen-Informationen (3) umkehrbar ist, und dass als Reifen-Informationen (3) zusätzlich Reifen-Temperaturen (35) auf dem Display (1) angezeigt werden.

6. Verfahren nach einem der Ansprüche 1 bis 5, **dadurch gekennzeichnet, dass** als Daten (19) die die aktuell angezeigten äußeren und inneren Reifen (8, 9; 10, 11) betreffenden Reifen-Drücke (5) beispielsweise in "bar" und zusätzlich gegebenenfalls die betreffenden Reifen-Temperaturen (35) beispielsweise in "°C" auf dem Display (1) im Umfeld der betreffenden Reifen (8, 9; 10, 11) des Reifen-Achsen-Schemas (13) angezeigt werden und dass gegebenenfalls als einen ersten Datentext (16) beispielsweise die Worte "Reifendruck" oder "Reifen-Temperatur", und gegebenenfalls als einen zweiten Datentext (17) beispielsweise die Worte "Zugwagen", "Anhänger 1" oder "Anhänger 2" in deutscher oder wahlweise sonstiger Sprache auf dem Display (1) im Umfeld der betreffenden Anzeige der Reifen (8, 9; 10, 11) des Reifen-Achsen-Schemas (13) angezeigt werden und dass mittels des Datentextes (17) und/oder gegebener selbsterklärender Symbolzeichen (41) der die jeweilig angezeigte Achse (12) aufnehmende Wagentyp kennzeichenbar ist, und dass gegebenenfalls bei Angabe der jeweiligen Wagentyps mittels Symbolzeichen (41) und/oder Datentext (17) die Nummerierung der Achsen bei jeden neuen Wagentyp erneut beginnt, und dass mittels einer zwischen den Reifen (8, 9; 10, 11) des Reifen-Achsen-Schemas (13) angegebenen Ziffer (Achskennung) (7) die aktuell auf dem Display (1) angezeigte Achse (12) gekennzeichnet ist.

7. Verfahren nach einem der Ansprüche 1 bis 6, **dadurch gekennzeichnet, dass** bei Auftreten einer Funktionsstörung eines Reifens bei den angezeigten Reifen (8, 9; 10, 11) dessen aktuell als Reifenkennung (4) angezeigte Vollmarkierung (14) auf dem Display (1) mit der Reifen-Defektmarkierung (6) markiert ist, und dass diese Reifen-Defektmarkierung (6) durch ein auf der Vollmarkierung (14) platziertes, gegenüber dieser kontrastmäßig oder farblich abgehobenes Ausrufezeichen (18) oder beispielsweise durch ein Normsymbol für Reifenstörung oder durch eine periodisch wechselnde Groß/Klein-, Farb-, Invertiert-Darstellung oder dergleichen gegeben ist.

8. Verfahren nach einem der Ansprüche 1 bis 7, **dadurch gekennzeichnet, dass** bei Auftreten einer Funktionsstörung eines angezeigten Reifens (8, 9; 10, 11) zusätzlich zur aktuell am Display (1) angezeigten Reifen-Defaktrnarkierung (6) eine invertierte oder optisch hervorgehobene Darstellung (34) der die diesen Reifen (8, 9; 10, 11) betreffenden Daten (19) und Datentexte (16, 17) und gegebenenfalls ein Signalton über einen mit der Anzeigevorrichtung in Verbindung stehenden Lautsprecher ausgegeben wird

9. Verfahren nach einem der Ansprüche 1 bis 8, **dadurch gekennzeichnet, dass** von den auf dem Display (1) anzeigbaren Reifen-Informationen (3) verschiedene zusätzliche Informationen (31) optional oder prioritätsbedingt zusätzlich oder anstelle der Reifen-Informationen (3) auf dem Display (1) angezeigt werden.

10. Verfahren nach einem der Ansprüche 1 bis 9, **dadurch gekennzeichnet, dass** bei gleichzeitiger Darstellung von zusätzlichen Informationen (31) und Reifen-Informationen (3) die zusätzlichen Informationen (31) in einem hierfür reservierten Darstellungsfeld (32) des Displays (1) angezeigt werden und dass dieses Darstellungsfeld (32) oberhalb oder unterhalb des Reifen-Achsen-Schemas (13) angeordnet ist.

11. Verfahren nach einem der Ansprüche 1 bis 10, **dadurch gekennzeichnet, dass** die Nummerierung der auf dem Display (1) sukzessiv anzeigbaren Achsen (12) mit der ersten vordersten Achse des gesamten Nutzfahrzeuges beginnt.

12. Verfahren nach einem der Ansprüche 1 bis 11, **dadurch gekennzeichnet, dass** eine Anzeige von Reifen-Informationen (3) einer aktuell abgerufenen Achse (12) - Achskennung/Achsposition (7) - auf dem Display (1) unterbleibt, wenn das Reifenkontrollsystem für diese Achse (12) keine Daten (19) am Display (1) zur Verfügung stellt.

13. Verfahren nach einem der Ansprüche 1 bis 12, **dadurch gekennzeichnet, dass** ein unvollständiges oder fehlerhaftes Zurverfügungstellen von Reifen-Informationen (3) eines anzeigbaren Reifens (8, 9; 10, 11) gegebenenfalls mittels eines dritten Datentextes (33) zur Anzeige gebracht wird wobei als dritten Datentext (33) beispielsweise Worte wie nicht verfügbar oder" "-,-" oder dergleichen vorsehbar sind, und dass alle übrigen verfügbaren Reifen-Informationen (3) der anzeigbaren Reifen (8, 9; 10, 11) der aktuell aufgerufenen Achse (12) im Display (1) angezeigt werden.

## Claims

1. Procedure for the indication of information on a display (1) of an indicating device in a commercial vehicle, whereby the information to be indicated and its modes of presentation can be selected by a driver by actuating an actuating element (2) from a range of information and modes of presentation shown on the display (1), **characterised in that** if an indicatable outer tyre pair (8, 9) and/or an indicatable inner tyre pair (10, 11) on an axle (12) of the entire commercial vehicle are/is present, at least tyre information (3) such as tyre positions (tyre recognition) (4), tyre pressures (5), tyre defect markings (6), axle positions (axle recognition) (7) can be displayed as indicatable information in the form of self-explanatory symbols and/or a data text (16, 17) and/or data (19) successively and in the form of a called-up single axle-by-axle presentation of a tyre-axle diagram (13) by the actuation of an actuating element (2) on a display (1) close to the driver's station.

2. Procedure according to Claim 1, **characterised in that** by means of the single presentation of the tyre/axle diagram (13) of a currently indicated tyre pair (8, 9; 10, 11) of an axle (12), if twin tyres are fitted,
a) first the available tyre information (3) on the outer tyre pair (8, 9) is indicated, whereby said information (3) is first indicated as tyre recognition (tyre positions) (4) in a full marking (14), and that
b) then - after renewed actuation of the actuating element (2) - the available tyre information (3) on the inner tyre pair (10, 11) is indicated, whereby said information (3) is indicated as tyre recognition (4) in a full marking (14) and that,
c) if required, the sequence of axles (12) currently indicatable in the tyre/axle diagram (13) on the display (1) and the sequence of the outer tyre pair (8, 9) and of the inner tyre pair (10, 11) of said axles (12) can be reversed.

3. Procedure according to Claim 2, **characterised in that** the respective outer or inner tyres (8, 9; 10, 11) on an axle (12) remain indicated on the display (1) as tyre recognition (4) in a non-updated, visually less conspicuous mode of presentation and that said mode of presentation of the outer or inner tyres (8, 9; 10, 11), which remain indicated, is provided in the form of a line (15) or broken line or in visually smaller form and that if the commercial vehicle is fitted with single tyres the visual indication of either the outer pair of tyres (8, 9) or of the inner pair of tyres (10, 11) of the tyre/axle diagram (13) is completely suppressed on the display (1).

4. Procedure according to one of the Claims 1 to 3, **characterised in that** by means of a button function provided in the actuating element (2) a preferred and, if appropriate, reversible sequence of indication of tyre information (3) which can be indicated/called up on the display (1) is provided, by means of which tyre information (3) first the outer tyres (8, 9), then the inner tyres (10, 11) on the same axle (12) and then the outer tyres (8, 9) and then the inner tyres (10, 11) on each subsequent or preceeding axle (12) are indicated in an up-to-date mode with actual full marking (14), data text (16, 17) and data (19) and, if appropriate, with tyre defect markings (6), said tyre information (3) being indicated after each repeated actuation of the actuating element (2).

5. Procedure according to one of the Claims 1 to 4, **characterised in that** if appropriate the sequence and direction of indications of the tyre information (3) which can be called up/indicated on the display (1) can be reversed by means of a reverse function additionally provided in the actuating element (2) and that tyre temperatures (35) are also indicated as tyre information (3) on the display (1).

6. Procedure according to one of the Claims 1 to 5, **characterised in that** the tyre pressures (5) concerning the currently indicated outer and inner tyres (8, 9; 10, 11) and, in addition, the relevant tyre temperatures (35) are if appropriate indicated as data (19) in, for example, "bar" and "°C" respectively on the display (1) in the vicinity of the relevant tyres (8, 9; 10, 11) of the tyre/axle diagram (13) and that, if appropriate, for example the words "tyre pressure" or "tyre temperature" are indicated as a first data text (16) and, if appropriate, for example, the words "tractor vehicle", "trailer 1" or "trailer 2" are indicated as a second data text (17) in the German or another optional language on the display (1) in the vicinity of the relevant indication for the tyres (8, 9; 10, 11) of the tyre/axle diagram (13) and that the type of vehicle equipped with the axle (12) indicated in each case can be marked by means of the data text (17) and/or of self-explanatory symbols (41) and that if the respective type of vehicle is indicated by means of symbols (41) and/or the data text (17) the numbering of the axles starts afresh for each and every new type of vehicle and that the axle (12) currently indicated on the display (1) is marked by means of a number (axle recognition) (7) indicated between the tyres (8, 9; 10, 11) of the tyre/axle diagram (13).

7. Procedure according to one of the Claims 1 to 6, **characterised in that** if a tyre of the indicated tyres (8, 9; 10, 11) is affected by a functional fault, its full marking (14) currently indicated as tyre recognition (4) will be marked with the tyre defect marking (6) on the display (1) and that this tyre defect marking (6) is indicated by an exclamation mark (18) placed on said full marking (14) and offset against said full marking with the aid of a suitable contrast or colour or, for example, of a standard symbol for tyre faults or of a periodically changing large/small, colour-type, inverted or similar presentation mode.

8. Procedure according to one of the Claims 1 to 7, **characterised in that** in the event of a functional fault in an indicated tyre (8, 9; 10, 11), an inverted or visually highlighted presentation (34) of the data (19) and data texts (16, 17) concerning this tyre (8, 9; 10, 11) and, if appropriate, an acoustic signal will be triggered in addition to the tyre defect marking (6) currently indicated on the display (1), said acoustic signal being sounded via a loudspeaker connected with the display.

9. Procedure according to one of the Claims 1 to 8, **characterised in that** additional information (31) which differs from the tyre information (3) indicatable on the display (1) is indicated on the display (1) as an option or as priority-dependent additional information or instead of the tyre information (3).

10. Procedure according to one of the Claims 1 to 9, **characterised in that** in the event of simultaneous presentation of additional information (31) and tyre information (3), the additional information (31) is indicated in a presentation field (32) of the display (1), which presentation field (32) is reserved for this purpose and arranged above or below the tyre/axle diagram (13).

11. Procedure according to one of the Claims 1 to 10, **characterised in that** the numbering of the axles (12) successively indicatable on the display (1) starts with the first foremost axle of the entire commercial vehicle.

12. Procedure according to one of the Claims 1 to 11, **characterised in that** tyre information (3) of a currently called-up axle (12) - axle recognition/axle position (7) - will not be indicated on the display (1) if the tyre control system for this axle (12) does not show any data (19) on the display (1).

13. Procedure according to one of the Claims 1 to 12, **characterised in that** if appropriate the incomplete or faulty provision of tyre information (3) for an indicatable tyre (8, 9; 10, 11) is indicated by means of a third data text (33) in the form of eg words such as "not available or", "-,-" etc and that all other available tyre information (3) for the indicatable tyres (8, 9; 10, 11) on the axle (12) currently called up is indicated on the display (1).

## Revendications

1. Procédé pour afficher des informations sur un écran (1) d'un dispositif d'affichage dans un véhicule industriel, auquel cas les informations à afficher et leur forme de représentation peuvent être sélectionnées par le chauffeur par l'actionnement d'éléments d'actionnement (2) parmi une offre d'informations représentées sur l'écran (1) et de formes de représentation, **caractérisé en ce qu'**il est possible d'afficher comme informations affichables, par l'actionnement d'un élément d'actionnement (2) sur un écran (1) placé près du poste de conduite, au moins des informations sur les pneus (3) telles que la position des pneus (code pneu) (4), la pression de chaque pneu (5), des marquages de panne de pneus (6), la position des essieux (code essieu) (7), en cas d'existence, à chaque fois d'une paire de pneus extérieure (8, 9) affichables et/ou d'une paire de pneus intérieure (10, 11) d'un essieu (12) de l'ensemble du véhicule industriel sous forme de symboles faciles à comprendre et/ou à l'aide d'un texte de données (16, 17) et/ou de données (19) de manière progressive et comme représentation individuelle par essieu d'un schéma essieu-pneus (13) de manière instantanée.

2. Procédé selon la revendication 1, **caractérisé en ce qu'**au moyen de la représentation individuelle du schéma essieu-pneus (13) d'une paire de pneus (8, 9 ; 10, 11) représentée momentanément en cas de monte double,
a) les informations disponibles sur les pneus (3) de la paire extérieure de pneus (8, 9) sont tout d'abord affichées et ces dernières sont représentées tout d'abord comme code pneus (position des pneus) (4) dans un marquage plein (14), **en ce que**
b) ensuite, après un nouvel actionnement de l'élément d'actionnement (2), les informations disponibles sur les pneus (3) de la paire intérieure de pneus (10, 11) sont affichées et ces dernières sont représentées comme code pneu (4) dans un marquage plein (14), et **en ce que**
c) l'ordre des essieux (12) affichables momentanément dans le schéma essieu-pneus (13) de l'écran ainsi que de sa paire extérieure de pneus (8, 9) et de sa paire intérieure de pneus (10, 11) peut être commuté.

3. Procédé selon la revendication 2, **caractérisé en ce que** les pneus extérieurs ou intérieurs (8, 9 ; 10, 11) restants affichés sur l'écran (1) de manière non actualisée d'un essieu (12) sont affichés comme code pneu (4) sous une forme de représentation visuellement insignifiante et **en ce que** cette forme de représentation est une représentation en lignes (15) ou en pointillés, ou encore est réalisée par une réduction visuelle des pneus extérieurs ou intérieures restants affichés (8, 9 ; 10, 11), et **en ce qu'**en cas de monte simple sur le véhicule industriel, l'affichage visuel de la paire de pneus extérieurs (8, 9) ou de la paire de pneus intérieurs (10, 11) du schéma essieu-pneus (13) soit intégralement inhibé sur l'écran (1).

4. Procédé selon l'une des revendications 1 à 3, **caractérisé en ce qu'**une série d'affichages préférés et, le cas échéant, commutables d'informations affichables/appelables sur les pneus (3) sur l'écran est prévue au moyen d'une fonction de déclenchement prévue dans l'élément d'actionnement (2), une série au moyen de laquelle, après chaque nouvel actionnement de l'élément d'actionnement (2), tout d'abord les pneus extérieurs (8, 9), puis les pneus intérieurs (10, 11) du même essieu (12), puis les pneus extérieurs (8, 9) et ensuite les pneus intérieurs (10, 11) de chaque essieu (12) suivant ou précédent doté d'un marquage plein (14), un texte de données (16, 17), des données (19) et, le cas échéant, des marquages de panne de pneus (6) s'affichent momentanément.

5. Procédé selon l'une des revendications 1 à 4, **caractérisé en ce qu'**au moyen d'une fonction de commutation prévue en supplément dans l'élément d'actionnement, il est possible de commuter si nécessaire l'ordre d'affichage et, le cas échéant, le sens de l'ordre d'affichage des informations sur les pneus (3) appelables/affichables sur l'écran, et **en ce que** la température des pneus (35) peut en supplément être affichée sur l'écran comme informations sur les pneus (3).

6. Procédé selon l'une des revendications 1 à 5, **caractérisé en ce que** la pression des pneus (5) concernant les pneus extérieurs et intérieurs (8, 9 ; 10, 11) affichés momentanément est affichée sous forme de données (19), par exemple, en « bars » et en supplément, le cas échéant, la température des pneus (35) en question est affichée sous forme de données (19), par exemple, en « °C » sur l'écran (1) à proximité des pneus concernés (8, 9 ; 10, 11) du schéma essieu-pneus (13), et **en ce que**, le cas échéant, comme exemple de premier texte de données (16), les mots « Pression des pneus » ou « Température des pneus » et, le cas échéant comme exemple de deuxième texte de données (17), les mots «Véhicule tracteur », « Remorque 1 » ou « Remorque 2 » sont affichés sur l'écran (1) en langue allemande ou, au choix, dans une autre langue à proximité de l'affichage concerné des pneus (8, 9 ; 10, 11) du schéma essieu-pneus (13), et **en ce qu'**au moyen du texte de données (17) et/ou des symboles faciles à comprendre (41), le type de véhicule recevant chaque essieu affiché (12) peut être identifié, et **en ce que**, le cas échéant, la numérotation des essieux de chaque nouveau type de véhicule recommence lors de l'indication de chaque type de véhicule au moyen de symboles (41) et/ou de texte de données (17), et **en ce que** l'essieu (12) affiché momentanément sur l'écran (1) est identifié au moyen d'un chiffre (identification de l'essieu) (7) indiqué entre les roues du schéma essieu-pneus (13).

7. Procédé selon l'une des revendications 1 à 6, **caractérisé en ce qu'**en cas de dysfonctionnement d'un pneu parmi les pneus affichés (8, 9 ; 10, 11), son marquage plein (14) affiché momentanément comme identification du pneu (4) est marqué sur l'écran (1) à l'aide du marquage de panne du pneu (6), et **en ce que** ce marquage de panne du pneu (6) est fourni par un point d'exclamation (18) placé sur le marquage complet (14) et se détachant par contraste ou de manière colorée par rapport au marquage complet (14), ou bien, par exemple, par un symbole normé pour panne de pneu, ou bien encore par une représentation en alternance en minuscules/majuscules, en couleurs, inversée ou par une représentation similaire.

8. Procédé selon l'une des revendications 1 à 7, **caractérisé en ce qu'**en cas de dysfonctionnement d'un pneu affiché (8, 9 ; 10, 11), une représentation inversée ou mise en valeur visuellement (34) des données (19) et des textes de données (16, 17) relatives à ce pneu (8, 9 ; 10, 11), et, le cas échéant, un signal sonore sont émis par le biais d'un haut-parleur associé au dispositif d'affichage, en plus du marquage de panne de pneu (6) affiché momentanément sur l'écran (1).

9. Procédé selon l'une des revendications 1 à 8, **caractérisé en ce que**, parmi les informations sur les pneus (3) affichables sur l'écran (1), diverses informations supplémentaires (31) sont affichées sur l'écran de manière optionnelle ou en supplément en fonction de la priorité ou bien à la place des informations sur les pneus (3).

10. Procédé selon l'une des revendications 1 à 9, **caractérisé en ce qu'**en cas de représentation simultanée d'informations supplémentaires (31) et d'informations sur les pneus (3), les informations supplémentaires (31) sont affichées dans ce champ de représentation (32) réservée pour cela sur l'écran (1) et **en ce que** ce champ de représentation (32) est disposé au-dessus ou en dessous du schéma essieu-pneus (13).

11. Procédé selon l'une des revendications 1 à 10, **caractérisé en ce que** la numérotation des essieux (12) affichables successivement sur l'écran (1) commence par le premier essieu avant de l'ensemble du véhicule industriel.

12. Procédé selon l'une des revendications 1 à 11, **caractérisé en ce qu'**un affichage d'informations sur les pneus (3) d'un essieu (12) appelé momentanément - identification de l'essieu/position de l'essieu - disparaît si le système de surveillance des pneus ne met aucune donnée (19) à disposition sur cet essieu (12) sur l'écran (1).

13. Procédé selon l'une des revendications 1 à 12, **caractérisé en ce qu'**une mise à disposition incomplète ou erronée d'informations sur les pneus (3) d'un pneu affichable (8, 9 ; 10, 11) est affichée au moyen d'un troisième texte de données (33), auquel cas les mots tels que « indisponibles » ou « -,- » ou des textes similaires peuvent être prévus, et **en ce que** toutes les informations sur les pneus (3) restantes indisponibles des pneus affichables (8, 9 ; 10, 11) de l'essieu (12) appelé momentanément sont affichées.
